(19) **Europäisches Patentamt / European Patent Office / Office européen des brevets**

(11) **EP 4 318 189 A1**

(12) **EUROPEAN PATENT APPLICATION**
published in accordance with Art. 153(4) EPC

(43) Date of publication:
**07.02.2024 Bulletin 2024/06**

(21) Application number: **22831933.1**

(22) Date of filing: **27.06.2022**

(51) International Patent Classification (IPC):
**G06F 3/041** (2006.01)

(52) Cooperative Patent Classification (CPC):
**G06F 3/041**

(86) International application number:
**PCT/CN2022/101427**

(87) International publication number:
**WO 2023/274119 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 CN 202110738887**
**27.08.2021 CN 202110997006**

(71) Applicant: **Huawei Technologies Co., Ltd.**
**Shenzhen, Guangdong 518129 (CN)**

(72) Inventors:
- **BAI, Zhongjia**
  **Shenzhen, Guangdong 518129 (CN)**
- **LIN, Fei**
  **Shenzhen, Guangdong 518129 (CN)**
- **YANG, Yang**
  **Shenzhen, Guangdong 518129 (CN)**
- **LENG, Jinan**
  **Shenzhen, Guangdong 518129 (CN)**
- **SHEN, Qingchun**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **TOUCH OPERATION RECOGNITION METHOD AND APPARATUS, AND RELATED DEVICE**

(57) This application provides a touch control operation identification method, apparatus, and a related device, and is applied to a terminal device. The terminal device includes an IMU array and a touchscreen. The method includes: First, a touch control operation is received via the touchscreen. Then, touch control data generated by the touch control operation is obtained. After the touch control data generated by the touch control operation is obtained, a type of the touch control operation is identified based on the touch control data. The touch control data includes an acceleration generated on the touchscreen, where the acceleration is obtained by one or more IMUs related to a touch control point in the IMU array. In this way, accuracy of touch control identification performed by the terminal device can be improved, and touch control experience of a user can be optimized.

Receive a touch control operation via a touchscreen 110 — S301

Obtain touch control data generated by the touch control operation, where the touch control data includes an acceleration generated on the touchscreen 110, and the acceleration is obtained by one or more IMUs that are related to a touch control point in an IMU array 120 — S302

Identify a type of the touch control operation based on the touch control data — S303

FIG. 3

EP 4 318 189 A1

**Description**

This application claims priority to Chinese Patent Application No. 202110738887.4, filed on June 30, 2021 and entitled "KNUCKLE TAP IDENTIFICATION METHOD, APPARATUS, AND SYSTEM", and to Chinese Patent Application No. 202110997006.0, filed with the China National Intellectual Property Administration on August 27, 2021 and entitled "TOUCH CONTROL OPERATION IDENTIFICATION METHOD, APPARATUS, AND RELATED DEVICE", which are incorporated herein by reference in their entireties.

**TECHNICAL FIELD**

This application relates to the field of artificial intelligence (artificial intelligence, AI) technologies, and in particular, to a touch control operation identification method and apparatus, a related device, and a computer-readable storage medium.

**BACKGROUND**

With the development of science and technology, more and more terminal devices (such as mobile phones) start to use touchscreens, so that a user can conveniently control the terminal device through a touch control operation. For example, a screenshot operation may be triggered by tapping the touchscreen with a knuckle.

Currently, a terminal device mainly relies on an IMU deployed at a central position on a side that is of a touchscreen and that is close to a back of the terminal, to obtain an acceleration of the terminal device generated by a touch control operation. If a vector change of the obtained acceleration exceeds a preset value, it is determined that knuckle touch control occurs. If a vector change of the obtained acceleration does not exceed the preset value, it is determined that no knuckle touch control occurs.

The inventor of this application finds that the foregoing solution is applicable when a touchscreen size of a terminal device is relatively small (for example, 6 inches or 7 inches). If the foregoing solution is also used on a terminal device (for example, an electronic whiteboard) with a touchscreen of a relatively large size (for example, 60 inches or 80 inches), when a position at which a user performs a touch control operation is far away from an IMU at a central position, an acceleration collected by the IMU may be very small, or even cannot be collected. As a result, the device cannot accurately determine whether knuckle touch control occurs, or even incorrectly determines that no knuckle touch control occurs. This severely affects touch control experience of the user. In addition, if the user touches the touchscreen by using another non-knuckle part (for example, a fingernail or a finger pulp) or an object (for example, a stylus pen) instead of using a knuckle to perform touch control on the touchscreen, the IMU may also detect an acceleration change, and an acceleration vector change may also exceed a preset value. As a result, the device incorrectly determines that the non-knuckle touch control is knuckle touch control.

In conclusion, when the foregoing solution is applied to a terminal device with a touchscreen of a large size, there is a problem that accuracy of determining a touch control operation type is low and touch control experience of a user is affected.

**SUMMARY**

This application provides a touch control operation identification method, apparatus, a related device, and a computer-readable storage medium, to improve accuracy of determining a type of a touch control operation by a terminal device with a touchscreen of a large size, and optimize touch control experience of a user.

According to a first aspect, a touch control operation identification method is provided, and is applied to a terminal device. The terminal device includes an inertial measurement unit IMU array and a touchscreen. The method includes the following steps: First, a touch control operation is received via the touchscreen. Then, touch control data generated by the touch control operation is obtained. After the touch control data generated by the touch control operation is obtained, a type of the touch control operation is identified based on the touch control data. The touch control data includes an acceleration generated on the touchscreen, where the acceleration is obtained by one or more IMUs related to a touch control point in the IMU array.

It can be learned from the foregoing solution that, the acceleration that is generated on the touchscreen and that is included in the touch control data is obtained by the one or more IMUs related to the touch control point in the IMU array. Compared with a conventional technology in which only one IMU deployed at a central position of the touchscreen obtains the acceleration, this application can avoid a case that the acceleration is unobtainable and the type of the touch control operation is unidentifiable.

In addition, when there are a plurality of IMUs related to the touch control point, in the foregoing solution, the type of the touch control operation is identified based on accelerations obtained by the plurality of IMUs related to the touch control point. Compared with the conventional technology in which a type of a touch control operation is identified based on only an acceleration obtained by one IMU, reference data are more abundant. This can improve accuracy of touch control operation identification.

In a possible implementation, the type of the touch control operation is one of the following types: knuckle touch control, fingernail touch control, finger pulp touch control, and stylus pen touch control.

In this implementation, the type of the touch control operation can be identified as the knuckle touch control, the fingernail touch control, the finger pulp touch control, or the stylus pen touch control. This is different from the conventional technology in which the knuckle touch control and the non-knuckle touch control are not accurately distinguished between. Therefore, a probability that the knuckle touch control is incorrectly determined as the non-knuckle touch control can be reduced, and accuracy of touch control operation identification can be improved. In addition, it may be understood that, when the accuracy of the touch control operation identification is high, an action subsequently performed based on the type of the touch control operation is also more accurate, so that touch control experience of a user can be optimized.

In a possible implementation, the related IMU is one or more IMUs that are in the IMU array and that are closest to the touch control point physically, or an IMU corresponding to an area in which the touch control point is located when each IMU in the IMU array is responsible for a partial area of the touchscreen. Therefore, regardless of that a user inputs a touch control operation at any position of a touchscreen 110, a related IMU can obtain an acceleration generated on the touchscreen 110 by the touch control operation, to avoid a case that the acceleration is unobtainable and a type of the touch control operation is unidentifiable.

In a possible implementation, the one or more IMUs related to the touch control point may be specifically determined in the following manner: A position of the touch control point is obtained. Then, an IMU whose distance from the touch control point is greater than a preset distance in the IMU array is filtered out based on the position of the touch control point, and the one or more related IMUs are determined.

In a possible implementation, the touch control data further includes one or more of the following: a sound generated by the touch control operation on the touchscreen, contact duration between the touch control operation and the touchscreen, and a contact area between the touch control operation and the touchscreen.

In this implementation, the touch control operation identification is subsequently performed based on more abundant touch control data, so that the accuracy of the touch control operation identification is further improved.

In a possible implementation, the type of the touch control operation may be specifically identified based on the touch control data in the following manner.

First, a feature of the acceleration is obtained based on the acceleration obtained by the one or more related IMUs, and then the feature of the acceleration is input to a second network to obtain the type of the touch control operation. When there is one related IMU, the feature of the acceleration is the acceleration obtained by the related IMU, and when there are a plurality of related IMUs, the feature of the acceleration is an acceleration feature vector obtained by constructing an undirected graph based on the acceleration obtained by the plurality of related IMUs, and inputting the undirected graph to a first network for feature extraction.

In a possible implementation, a parameter that is input to the second network further includes at least one of the following content: a voiceprint spectrum of the sound, the contact duration, and the contact area. In this implementation, reference data can be more abundant when the second network performs touch control identification, to further improve the accuracy of the identification.

In a possible implementation, the touchscreen is a capacitive touchscreen, and the touch control data further includes one or more of the following capacitive screen parameters: a capacitance value of each point on the touchscreen when the touch control operation is performed on the touchscreen, a capacitance image that is generated based on the capacitance value of each point on the touchscreen, and a feature that is of a contact area and that is extracted based on the capacitance image, where the contact area is an area in which the touch control operation is in contact with the touchscreen.

In this implementation, when the touchscreen is the capacitive touchscreen, the touch control operation identification is subsequently performed based on more abundant touch control data, so that the accuracy of the touch control operation identification is further improved.

In a possible implementation, the touchscreen is an infrared technology touchscreen, and the touch control data further includes one or more of the following infrared screen parameters: infrared information of each point on the touchscreen when the touch control operation is performed on the touchscreen, an infrared image that is generated based on the infrared information of each point on the touchscreen, and a feature that is of a contact area and that is extracted based on the infrared image.

In this implementation, when the touchscreen is the infrared technology touchscreen, the touch control operation identification is subsequently performed based on more abundant touch control data, so that the accuracy of the touch control operation identification is further improved.

In a possible implementation, the parameter that is input to the second network further includes at least one of the following content: the capacitive screen parameter and the infrared screen parameter. In this implementation, reference data can be more abundant when the second network performs touch control identification, to further improve the accuracy of the identification.

In a possible implementation, the touch control data is data within a preset time period, and the preset time period includes a moment at which the touch control operation is performed on the touchscreen.

Because the acceleration generated by the touch control operation on the touchscreen, the sound generated by the touch control operation on the touchscreen, and the like are not fixed, and are data that changes with time, an excessively large or small amount of touch control data, for example, an obtained acceleration and an obtained sound, may be avoided by obtaining touch control data within the preset time period. The excessively large or small amount of touch control data affects the accuracy of the subsequent touch control operation identification.

In a possible implementation, the first network is a graph neural network, and the second network is a convolutional neural network.

In a possible implementation, the IMU array is deployed at a preset position on a side that is of the touchscreen and that is close to a back of the terminal device, so that a range in which the IMU array obtains the acceleration can cover all areas of the touchscreen. Therefore, when a user performs touch control at any position of the touchscreen, the IMU array can obtain the acceleration generated on the touchscreen, to avoid the case that the acceleration is unobtainable and the type of the touch control operation is unidentifiable.

In a possible implementation, the IMU array includes five IMUs, one IMU is deployed at a central position of the side that is of the touchscreen and that is close to the back of the terminal device, and the remaining four IMUs are deployed at four corners of the side that is of the touchscreen and that is close to the back of the terminal device.

In a possible implementation, the method further includes: performing, based on the type of the touch control operation, an action indicated by the touch control operation.

Touch control operations of different types indicate different actions, so that flexibility of performing control on the terminal device by the user through the touch control operation can be improved, and the touch control experience of the user can be optimized.

In a possible implementation, the terminal device is an electronic whiteboard.

According to a second aspect, a touch control operation identification apparatus is provided. The apparatus includes modules that are configured to perform the touch control operation identification method in any one of the first aspect or the possible implementations of the first aspect.

According to a third aspect, a terminal device is provided. The terminal device includes a processor and a memory. The memory is configured to store instructions. When the terminal device runs, the processor executes the instructions to implement the method provided in any one of the first aspect or the possible implementations of the first aspect.

According to a fourth aspect, a computer-readable storage medium is provided. The computer-readable storage medium stores instructions. When the instructions are run on a computer, the computer is enabled to perform the method provided in any one of the first aspect or the possible implementations of the first aspect.

According to a fifth aspect, a computer program product is provided. When the computer program product runs on a computer, the computer is enabled to perform the method provided in any one of the first aspect or the possible implementations of the first aspect.

In this application, based on the implementations according to the foregoing aspects, the implementations may be further combined to provide more implementations.

**BRIEF DESCRIPTION OF DRAWINGS**

To describe the technical solutions in embodiments of this application more clearly, the following briefly describes the accompanying drawings for describing embodiments.

FIG. 1 is a schematic diagram of a structure of a terminal device according to this application;
FIG. 2 is a schematic diagram of deploying an IMU array 120 on a touchscreen according to this application;
FIG. 3 is a schematic flowchart of a touch control operation identification method according to this application;
FIG. 4A is a waveform diagram of an acceleration according to this application;
FIG. 4B is a waveform diagram of another acceleration according to this application;
FIG. 5A is a schematic diagram of a capacitance value change according to this application;
FIG. 5B is a schematic diagram of another capacitance value change according to this application;
FIG. 6 is a schematic flowchart of performing touch control operation identification based on touch control data according to this application;
FIG. 7 is a schematic diagram of an undirected graph according to this application;
FIG. 8 is another schematic flowchart of performing touch control operation identification based on touch control data according to this application;
FIG. 9 is a schematic diagram of a structure of a touch control operation identification apparatus according to this application; and
FIG. 10 is a schematic diagram of a structure of another terminal device according to this application.

**DESCRIPTION OF EMBODIMENTS**

To facilitate understanding of embodiments of this application for a person skilled in the art, related concepts, terms, or the like in embodiments of this application are first described.

(1) A neural network (neural network) may include a neural unit (also referred to as a neuron). The neural unit may be an operation unit that uses a variable $x_s$ and an intercept $b$ as inputs. An output of the operation unit may be:

$$h_{W,b}\left(x\right) = f\left(W^{T}x\right) = f\left(\sum_{s=1}^{n} W_s x_s + b\right)$$

$s$=1, 2, ..., $n$, $n$ is a natural number greater than 1, $W_s$ is a weight of $x_s$, and $b$ is an offset of the neural unit. $f$ is an activation function (activation function) of the neural unit, and is used to introduce a nonlinear feature into the neural network, to convert an input signal in the neural unit into an output signal. The output signal of the activation function may be used as an input of a next convolutional layer. The activation function may be a sigmoid function or another function. This is not limited herein. The neural network is a network formed by connecting many single neural units together. To be specific, an output of a neuron may be an input of another neural unit. An input of each neural unit may be connected to a local receptive field of a previous layer to extract a feature of the local receptive field. The local receptive field may be a region including several neural units. There are various neural networks. Common neural networks include a random forest (random forest) network, a support vector machine (support vector machine, svm) network, a graph neural network (graph neural network, GNN), a convolutional neural network (convolutional neural network, CNN), and the like.

(2) Euclidean domains data (Euclidean domains data) is a type of data with good translation invariance. For this type of data, one pixel is used as a node, and a quantity of neighboring nodes is the same. Therefore, a globally shared convolution kernel can be well defined to extract a same structure in an image, including images, texts, and languages commonly. Invariance of translation in an image, to be specific, the results (labels) should be the same regardless of where a target in the image is moved. Convolutions are defined as feature detectors at different positions.

(3) Non-Euclidean structure data (non-Euclidean structure data) is a type of data without translation invariance. This type of data uses one of the data as a node, and a quantity of neighboring nodes may be different. This type of data commonly includes a knowledge graph, a social network, a chemical molecular structure, and the like. Because this type of data does not have the translation invariance, same structure information cannot be extracted by using the convolution kernel, and the convolutional neural network is incapable of this type of data. Therefore, a network for processing this type of data is derived, namely, a graph neural network.

(4) A graph (graph) is not an image (image) or a map (map), but a data structure that is used to represent non-Euclidean structure data. A graph performs modeling on a group of objects and their relationships. Objects can be abstracted as vertices (vertices) in the graph. Relationships between objects can be abstracted as edges (edges) between vertices. Features of objects can be abstracted as vertex features. Edges can have weights. When an edge has a weight, the relationship between vertices at both ends of the edge can be better reflected. Typical graphs include social networks, route networks, knowledge graphs, and the like. For example, when the graph is a route network, a feature of a vertex may include a coordinate of the vertex, a name of a city to which the vertex belongs, and the like. A weight of an edge may be a physical distance between two vertexes, or a time from one vertex to another vertex, or the like. If the edge between any two vertices in a graph is an undirected edge (in short, an edge without direction), the graph is called an undirected graph (undirected graph).

(5) A graph neural network extends a convolution operation from Euclidean domains data (for example, an image) to non-Euclidean structure data (for example, a graph), and is a neural network that uses graph structure data as an input.

A core idea of the graph neural network is to perform "aggregation" on "node information" by using "edge information" to generate a "new node representation". In other words, the graph neural network may learn a mapping function $f()$. By using the mapping function, a vertex v, in the graph may aggregate a feature $x_i$ of the vertex and a feature $x_j (j \in N(v_i))$ of a neighboring vertex, to generate a new representation of the vertex $v_i$, that is, a new feature vector. The new feature vector may be used for vertex classification. The new feature vector aggregates a feature of the new feature vector and a feature of a neighboring vertex. Therefore, when vertex classification is performed by using the new feature vector, accuracy of an obtained classification result is higher than that when vertex classification is performed by directly using a feature $x_i$ of a vertex. When new feature vectors of all the vertices in the graph are obtained, classification may be performed on the graph by combining the new feature vectors of all the vertices. The new feature vectors of all the vertices in the graph aggregate features of each vertex and features of its neighboring vertices. Therefore, the classification result obtained by using the new feature vectors of all vertices in the graph is more accurate than that by directly using the features of all vertices in the graph. Typical graph neural networks include a graph convolutional network (graph convolutional network, GCN), a graph attention network (graph attention network), a graph autoencoder (graph autoencoder), a graph generative network (graph generative network), a graph spatial-temporal network (graph spatial-temporal network), and the like.

(6) A convolutional neural network is a multi-layer neural network used to process Euclidean domains data. The convolutional neural network includes a residual neural network (residual neural network, ResNet), a VGG network (VGG network, VGGNet), a dense convolutional network (dense convolutional network, DenseNet), and the like. The convolutional neural network usually includes three layers: a convolution layer, a pooling layer, and a fully connected layer. The convolution layer is the core of the convolutional neural network and is used to extract features. The pooling layer is configured to perform pooling processing. A process of pooling processing may be considered as a process of sampling an input feature vector. Dimension reduction may be performed on the input feature vector through pooling processing. Generally, there is max pooling (max pooling) or average pooling (average pooling). The fully connected layer plays a role of a classifier in the entire convolutional neural network and is used to output a final classification result.

(7) Model training is a process of training a neural network to obtain a trained model that can be used to complete a specific task. Training a neural network is to use existing data to fit a rule of the existing data through a specific method, to determine parameters in the neural network. Training a neural network needs to use a dataset. Based on whether data in the dataset has a label (in other words, whether the data has a specific type or name), neural network training may be classified into supervised training and unsupervised training.

When the supervised training is performed on the neural network, data in a dataset that is used for training has a label. During neural network training, the data in the dataset is used as an input of the neural network, a label corresponding to the data is used as a reference for an output value of the neural network, a loss value (loss) between the output value of the neural network and the label corresponding to the data is calculated through a loss function (loss function), and a parameter in the neural network is adjusted based on the loss value, until the neural network can accurately output, based on the input data, an output value that is the same as a label corresponding to the data. When the unsupervised training is performed on the neural network, data in a dataset that is used for training has no label. During neural network training, data in the dataset is input to the neural network at a time, and the neural network gradually learns associations and potential rules between the data until the neural network can be used to determine or identify a type or a feature of the input data.

(8) A loss function (loss function), also referred to as an objective function (objective function), is a function used to measure a degree of training of a model (to be specific, used to calculate a difference between a value predicted by the model and a real target value). In a model training process, an output of the model is expected to be as close as possible to a value that needs to be predicted. Therefore, a predicted value of a current model and a target value that needs to be predicted may be compared, and then a weight vector of each layer of the neural network in the model is updated based on a difference between the two values (certainly, an initialization process is usually performed before a first update, in other words, a parameter is preconfigured for each layer in the model). For example, if the predicted value of the model is high, the weight vector is adjusted to make the predicted value lower, and the adjustment is continuous until the model can predict the desired target value or a value that is close to the desired target value. Then the model training is considered complete.

(9) A capacitive touchscreen (capacitive touchscreen), short for capacitive screen, is a touchscreen that performs work by using current sensing of a human body. The capacitive screen includes a plurality of capacitive sensing nodes, the plurality of capacitive sensing nodes form a grid array in an X direction and a Y direction, and each capacitive sensing node represents a different coordinate on the capacitive screen. When a target (for example, a finger) touches the capacitive screen, an electric field of the target interacts with an electric field of the capacitive sensing node, which causes a capacitance change of the capacitive sensing node. A capacitance value may be represented by a grayscale value, and a value range of the grayscale value is 0 to 255. 0 indicates that capacitive coupling is the strongest, and 256 indicates that the capacitive coupling is the weakest. A device deployed with a capacitive screen may detect a capacitance value change of each capacitive sensing node, and record coordinates of a capacitive sensing node whose capacitance changes. The capacitance value change of each point on the capacitive screen may be used to generate an image of the touch plane at a specific moment, which is referred to as a capacitance image for short. The capacitance image includes a capacitance value at each point.

When capacitance values of a plurality of points on a grid matrix change, the plurality of points form a contact area. A capacitance value of each point in the capacitance image may be used to distinguish a boundary of the contact area, and determine coordinates of each point on the boundary.

(10) An infrared technology touchscreen (infrared touchscreen technology), referred to as an infrared screen for short, is composed of an infrared transmitting element and an infrared receiving element that are mounted on an outer frame of the touchscreen. The infrared transmitting element and the infrared receiving element form a positioning plane on a surface of the touchscreen, in other words, each infrared transmitting element and each infrared receiving element correspond to a position coordinate. The infrared transmitting element may transmit an infrared ray to the infrared receiving element, and the infrared receiving element may receive the infrared ray transmitted by the infrared transmitting element. After receiving the infrared ray, the infrared receiving element converts a received optical signal of the infrared ray into an electrical signal, to obtain a signal value corresponding to the infrared ray, where the signal value corresponding to the infrared ray is infrared information. If the infrared ray is not blocked, the signal value of the infrared ray received by the infrared receiving element should be a preset value. If the infrared ray is blocked, an intensity of the infrared ray decreases sharply, so that the signal value of the infrared ray received by the infrared receiving element is far less than the preset value. A change of infrared information of each point on the infrared screen may be used to generate an image of the touch plane at a specific moment, which is referred to as an infrared image for short. The infrared image is usually a grayscale image. A pixel value of each point in the infrared image is a grayscale value of the point, and a value range of the grayscale value is 0 to 255.

When infrared information of a plurality of points on the infrared screen changes, the plurality points form a contact area. A pixel value of each point in the infrared image may be used to distinguish a boundary of the contact area, and determine coordinates of each point on the boundary.

(11) An inertial measurement unit (inertial measurement unit, IMU) is an apparatus for measuring the three-axis attitude angle (or angular rate) and an acceleration of an object. In this application, an IMU is mainly configured to measure an acceleration.

(12) A microphone array (microphone array, MA) refers to an arrangement of microphones, in other words, a system that includes a specific quantity of acoustic sensors (generally microphones) and that is used to sample and process spatial characteristics of a sound field.

(13) Beam forming (beam forming, BF) is a combination of antenna technology and digital signal processing technology, and is used for directional signal transmission or reception. By using this technology, the device can filter, based on a position of a sound source, a difference between phases of sounds received by a microphone array to obtain a sound in a specific position, so that an ambient background sound can be removed to the greatest extent, and only a required sound is left. In a noisy environment, the device with this configuration can eliminate noise.

An application scenario in this application is a scenario in which a terminal device (for example, an electronic whiteboard) with a touchscreen (for example, a capacitive screen or an infrared screen) of a large size needs to be used to perform a touch control operation, for example, an enterprise conference, medical treatment, or teaching, to improve accuracy of performing touch control operation identification on a terminal device that is used in these scenarios, and optimize touch control experience of a user.

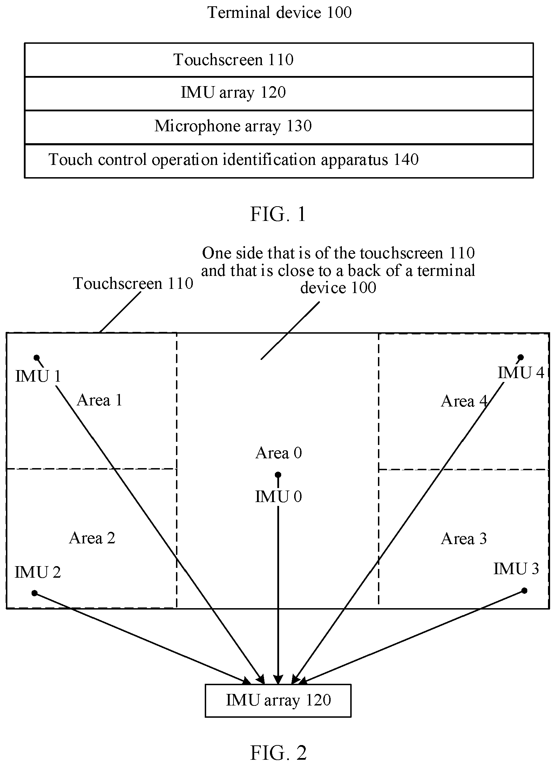

FIG. 1 is a schematic diagram of an architecture of a terminal device according to this application. As shown in FIG. 1, the terminal device 100 may include a touchscreen 110, an IMU array 120, a microphone array 130, and a touch control operation identification apparatus 140.

The touchscreen 110 of the terminal device 100 may receive a touch control operation that is input by a user. When receiving the touch control operation input by the user, the terminal device 100 may obtain, via the touch control operation identification apparatus 140, touch control data generated by the touch control operation, for example, an acceleration and a sound that are generated on the touchscreen 110 by the touch control operation, and contact duration and a contact area between the touch control operation and the touchscreen 110. After obtaining the touch control data, the touch control operation identification apparatus 140 may identify a type of the touch control operation based on the touch control data. Specifically, it may be identified that the type of the touch control operation is knuckle touch control, fingernail touch control, finger pulp touch control, stylus pen touch control, or the like.

In a specific embodiment of this application, an acceleration generated on the touchscreen 110 by the touch control operation may be obtained by the IMU array 120. Then, the IMU array 120 transmits the obtained acceleration to the touch control operation identification apparatus 140. A sound generated on the touchscreen 110 by the touch control operation may be obtained by the microphone array 130. Then the microphone array 130 transmits the obtained sound to the touch control operation identification apparatus 140. The touch control operation identification apparatus 140 performs identification on the type of the touch control operation based on the touch control data, for example, the acceleration, the sound, and the contact duration and the contact area that are obtained by the touch control operation identification apparatus 140.

In a specific embodiment of this application, the IMU array 120 may be deployed, based on a size of the touchscreen 110, at a preset position on a side that is of the touchscreen 110 and that is close to a back of the terminal device 100, so that a range in which the IMU array 120 collects the acceleration can cover all areas of the touchscreen 110. In other words, regardless of that a position at which a user inputs the touch control operation is at any position on the touchscreen 110, the IMU array 120 may collect the acceleration generated on the touchscreen 110 by the touch control operation. Each IMU in the IMU array 120 may be responsible for a partial area of the touchscreen 110, and the partial areas for which the IMUs are responsible may not overlap with each other, or may partially or completely overlap. This is not specifically limited herein.

For example, the IMU array 120 includes five IMUs, and partial areas for which the IMUs of the five IMUs are responsible do not overlap. In this case, for an actual deployment manner of the IMU array 120, refer to FIG. 2. To be specific, one IMU in the IMU array 120 is deployed at a central position on a side that is of the touchscreen 110 and that is close to the back of the terminal device 100. One IMU is deployed at each of four corners on the side that is of the touchscreen 110 and that is close to the back of the terminal device 100. The IMU 0 deployed at the central position is responsible for an area 0, an IMU 1 deployed at an upper left corner position is responsible for an area 1, ..., and an IMU 4 in the upper right corner position is responsible for an area 4. Therefore, when a touch control operation is performed on any position on the touchscreen 110, the IMU array 120 may collect the acceleration generated on the touchscreen 110 by the touch control operation.

It should be noted that, that the IMU array 120 shown in FIG. 2 includes five IMUs in total and a manner of deploying the IMU array 120 on the terminal device 100 are merely an example. During specific implementation, a quantity of IMUs that are included in the IMU array 120 may be less or more, and the IMU array 120 may alternatively be deployed on the terminal device 100 in another manner. For example, the IMU array 120 includes seven IMUs, and one of the IMUs is deployed at the central position of the side that is of the touchscreen 110 and that is close to the back of the terminal device 100. Remaining six IMUs are evenly deployed on four edges of the side that is of the touchscreen 110 and that is close to the back of the terminal device 100. This is not specifically limited herein. In addition, a division manner of the partial area that is of the touchscreen 110 and for which each IMU is responsible shown in FIG. 2 is also merely an example. In specific implementation, the area of the touchscreen 110 for which each IMU is responsible may be alternatively divided in another manner. For example, areas for which an IMU 0 to an IMU 5 are responsible are circular areas. This is not specifically limited herein.

The touch control operation identification apparatus 140 may be one software module deployed on the terminal device 100. Optionally, the touch control operation identification apparatus 140 may alternatively be implemented by hardware in the terminal device 100. For example, one processor in the terminal device 100 implements a function of the touch control operation identification apparatus 140. Deployment positions of the touch control operation identification apparatus 140 and the microphone array 130 are not specifically limited in this application.

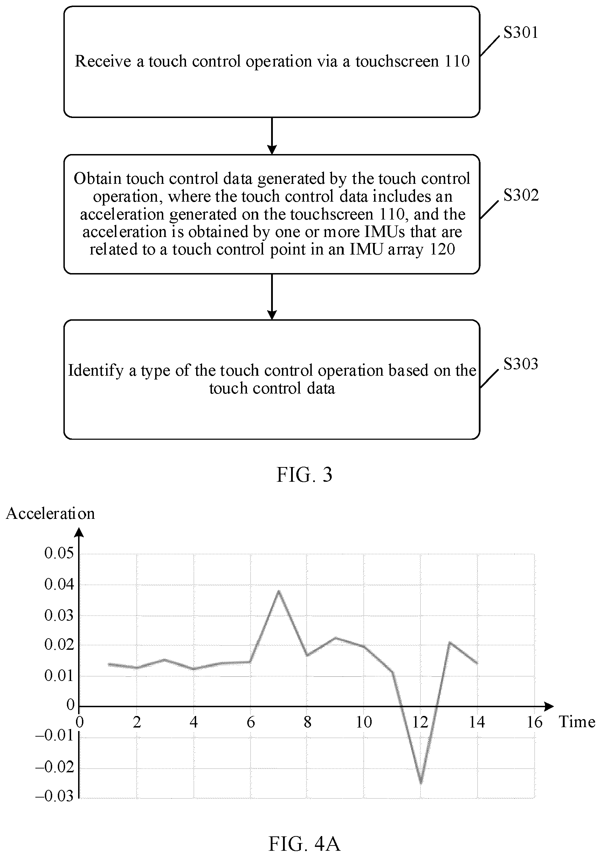

The following describes, with reference to FIG. 3, a touch control operation identification method provided in this application by using the touch control operation identification apparatus 140 shown in FIG. 1 as an execution body. As shown in FIG. 3, the method includes the following steps.

S301. Receive a touch control operation via the touchscreen 110.

The touch control operation may be input to the touchscreen 110 when a user touches or taps the touchscreen 110 by using a knuckle, a fingernail, a finger pulp, a stylus pen, or the like.

S302. Obtain touch control data generated by the touch control operation, where the touch control data includes an acceleration generated on the touchscreen 110, and the acceleration is obtained by one or more IMUs that are related to a touch control point in the IMU array 120.

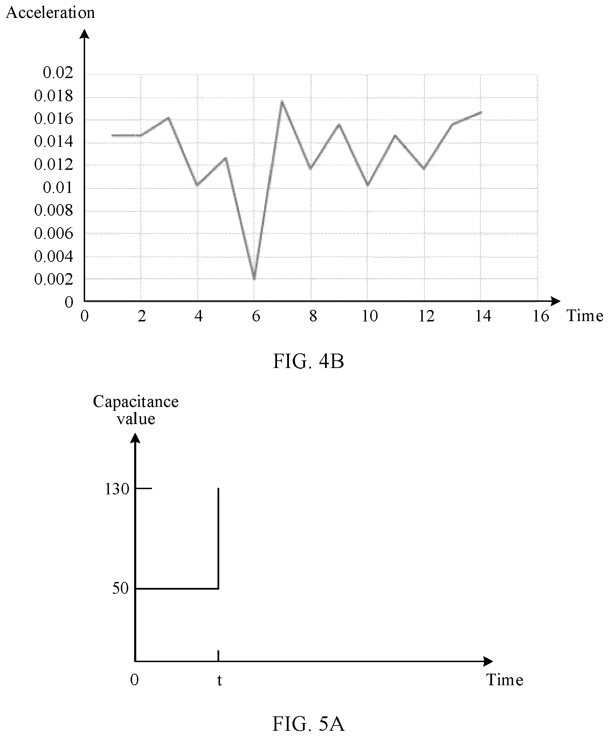

Usually, touch control operations of different types (such as knuckle touch control, fingernail touch control, finger pulp touch control, or stylus touch control) generates different accelerations on the touchscreen 110. For example, refer to FIG. 4A and FIG. 4B. FIG. 4A is a change waveform of an acceleration generated on the touchscreen 110 by the knuckle touch control. FIG. 4B is a change waveform of an acceleration generated on the touchscreen 110 by the finger pulp touch control. It can be learned by comparing FIG. 4A and FIG. 4B that, compared with the finger pulp touch control, a change amplitude of an acceleration generated by the knuckle touch control on the touchscreen 110 is larger. Therefore, touch control identification may be performed based on the touch control data that includes an acceleration generated on the touchscreen 110 by a touch control operation.

Usually, touch control operations of different types cause different sounds generated on the touchscreen 110, different contact duration with the touchscreen 110, different contact areas with the touchscreen 110, and the like. For example, the knuckle touch control is compared with the finger pulp touch control, and a sound generated by the knuckle touch control on the touchscreen 110 is usually louder (in other words, an amplitude is larger), contact duration is shorter than contact duration of the finger pulp touch control, and a contact area is smaller than a contact area of the finger pulp touch control. It may be understood that, when the touch control data obtained by the touch control operation identification apparatus 140 includes a large quantity of data types, accuracy of subsequently performing touch control identification based on the touch control data is also higher. Therefore, the touch control data obtained by the touch control operation identification apparatus 140 may further include a sound generated on the touchscreen 110 by the touch control operation, contact duration and a contact area between the touch control operation and the touchscreen 110, and the like.

In a possible implementation, the touchscreen 110 is a capacitive touchscreen, and the touch control operation further affects a capacitive touchscreen parameter, for example, a capacitance value of each point on the touchscreen 110, a capacitance image generated based on the capacitance value of each point on the touchscreen 110, and a feature that is of a contact area between the touch control operation and the touchscreen 110 and that is extracted based on the capacitance image. The feature of the contact area may be coordinates of points on a boundary of the contact area, a centroid coordinate of the contact area, or the like. This is not specifically limited herein.

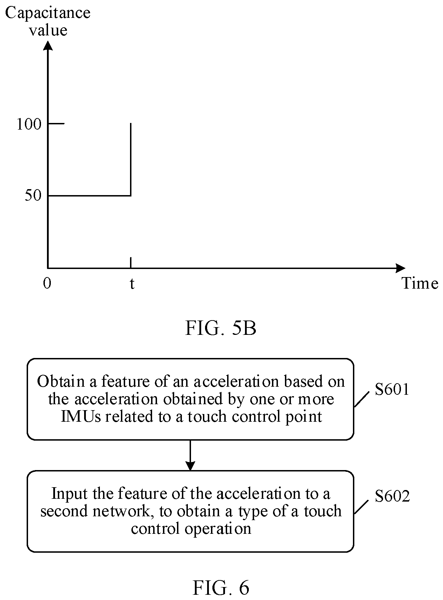

Usually, touch control operations of different types have different impact on the capacitive touchscreen parameter. For example, the capacitive touchscreen parameter is a capacitance value of a point on the capacitive touchscreen. Refer to FIG. 5A and FIG. 5B. FIG. 5A is a diagram of a capacitance value change of a point on the capacitive touchscreen after the knuckle touch control, and FIG. 5B is a diagram of a capacitance value change of the same point on the capacitive touchscreen after the finger pulp touch control. It can be learned by comparing FIG. 5A and FIG. 5B that, compared with the finger pulp touch control, after the knuckle touch control is received, a capacitance value of the same point on the capacitive touchscreen has a larger change amplitude.

It may be understood that, when touch control operations of different types have different impact on the capacitance value of each point on the touchscreen 110, capacitance images generated based on the capacitance value of each point on the touchscreen 110 are also different, and contact areas that are included in the capacitance images and that are between the touch control operations and the touchscreen 110 are also different. Therefore, when the touchscreen 110 is a capacitive screen, to improve accuracy of subsequent touch control identification performed by the touch control operation identification apparatus 140 based on touch control data, the touch control data obtained by the touch control operation identification apparatus 140 may further include one or more of the following capacitive screen parameters: a capacitance value of each point on the touchscreen 110 when the touch control operation is performed on the touchscreen 110, a capacitance image generated based on the capacitance value of each point on the touchscreen 110, a feature of a contact area extracted based on the capacitance image, and the like.

In a possible implementation, the touchscreen 110 is an infrared screen, and the touch control operation further affects an infrared screen parameter, for example, infrared information of each point on the touchscreen 110, an infrared image generated based on the infrared information of each point on the touchscreen 110, and a feature that is of a contact area between the touch control operation and the touchscreen 110 and that is extracted based on the infrared image. The feature of the contact area may be coordinates of points on a boundary of the contact area, a centroid coordinate of the contact area, or the like. This is not specifically limited herein.

Usually, touch control operations of different types have different impact on the infrared screen parameter. Therefore, when the touchscreen 110 is an infrared screen, to improve accuracy of subsequent touch control identification performed by the touch control operation identification apparatus 140 based on touch control data, the touch control data obtained by the touch control operation identification apparatus 140 may further include one or more of the following capacitive screen parameters: infrared information of each point on the touchscreen 110 when the touch control operation is performed on the touchscreen 110, an infrared image generated based on the infrared information of each point on the touchscreen 110, a feature of a contact area extracted based on the infrared image, and the like.

The following describes in detail a manner in which the touch control operation identification apparatus 140 obtains the foregoing enumerated different types of touch control data.

(1) Acceleration generated on the touchscreen 110 by a touch control operation

When the touch control operation is performed on the touchscreen 110, the acceleration generated on the touchscreen 110 by the touch control operation may be obtained by one or more IMUs related to a touch control point in the IMU array 120, and then transmitted to the touch control operation identification apparatus 140 in real time.

In a possible implementation, the one or more IMUs related to the touch control point are one or more IMUs that are in the IMU array 120 and that are closest to the touch control point physically. Specifically, the one or more IMUs related to the touch control point may be determined from the IMU array 120 through the following steps.

A1. When the touch control operation is received via the touchscreen 110, a position of the touch control point at which the touch control operation is performed on the touchscreen 110 is obtained.

The position of the touch control point may be coordinates of the touch control point.

In specific implementation, the touch control operation identification apparatus 140 may obtain the position of the touch control point by using a function (for example, getRawXQ and getRawY()) that is in a motion event (motion event) mechanism and that is used to obtain a touch position.

A2. Based on the position of the touch control point, filter out an IMU whose distance from the touch control point is greater than a preset distance in the IMU array 120, to determine one or more related IMUs.

In specific implementation, the touch control operation identification apparatus 140 may pre-store coordinates of each IMU in the IMU array 120, and then after the coordinates of the touch control point are obtained, calculate the distance between each IMU and the touch control point based on the coordinates of the touch control point and the coordinates of each IMU. A value of the preset distance may be set based on an actual situation, and is not specifically limited herein.

For example, it is assumed that the coordinates of the touch control point are (10, 20) and the preset distance is 50 cm. An IMU that is in the IMU array 120 and whose distance from the touch control point is greater than 50 cm may be filtered out, and a remaining IMU in the IMU array 120 is determined as an IMU related to the touch control point.

In another possible implementation, when each IMU in the IMU array 120 is responsible for a partial area of the touchscreen 110, the one or more IMUs related to the touch control point are IMUs corresponding to an area in which the touch control point is located.

Still take FIG. 2 as an example. It is assumed that the area in which the touch control point is located is the area 0. In this case, the IMU related to the touch control point in the IMU array 120 is the IMU 0.

It may be understood that, the acceleration generated on the touchscreen 110 by the touch control operation is not fixed, and is data that changes with time. Therefore, an acceleration obtained by each IMU in the IMU array 120 is an acceleration curve that changes with time. To avoid that the touch control operation identification apparatus 140 obtains excessively large or small amount of acceleration information, which affects accuracy of touch control operation identification, in this application, the touch control operation identification apparatus 140 may use an acceleration transmitted by the one or more IMUs related to the touch control point within a preset time period as the touch control data that can be referenced for subsequent touch control identification. The preset time period includes a moment at which the touch control operation is performed on the touchscreen 110. The preset time period may be detection duration that is preset in the touch control operation identification apparatus 140. A value of the detection duration may be set based on an actual situation, and is not specifically limited herein.

For example, it is assumed that the moment at which the touch control operation is performed on the touchscreen 110 is 15:15:21 p.m. on August 18, 2021, and the detection duration is 0.5 second. The touch control operation identification apparatus 140 may use an acceleration transmitted by the one or more IMUs related to the touch control point within 0.5 second from 15:15:21 to 15:15:21.5 as the touch control data that can be referenced for subsequent touch control identification.

In specific implementation, the touch control operation identification apparatus 140 may obtain, by using a function (for example, getDownTime()) that is in a motion event (motion event) mechanism and that is used to obtain a moment at which the touch control operation is performed on the touchscreen 110, the moment at which the touch control operation is performed on the touchscreen 110.

(2) Sound generated on the touchscreen 110 by a touch control operation

When the touch control operation is performed on the touchscreen 110, the sound generated on the touchscreen 110 by the touch control operation may be obtained by the microphone array 130, and then transmitted to the touch control operation identification apparatus 140 in real time.

It may be understood that, the sound generated on the touchscreen 110 by the touch control operation is not fixed, and is data that changes with time. Therefore, a sound obtained by each microphone in the microphone array 130 is a sound wave that changes with time. To avoid that the touch control operation identification apparatus 140 obtains excessively large or small amount of sound information, which affects accuracy of touch control operation identification, in this application, the touch control operation identification apparatus 140 may use a sound transmitted by the microphone array 130 within a preset time period as touch control data that can be referenced for subsequent touch control identification.

It may be further understood that when the touch control operation is performed on the touchscreen 110, there may be other noises in an environment in which the terminal device 100 is located, for example, a walking sound or a speaking sound. Therefore, when obtaining the sound generated by the touch control operation on the touchscreen 110, the microphone array 130 may obtain the noises, and then transmit the noises and a valid sound (to be specific, the sound generated by the touch control operation on the touchscreen 110) to the touch control operation identification apparatus 140. If the touch control operation identification apparatus 140 uses the noises and the valid sound together as the touch control data that can be referenced for the subsequent touch control identification, the noises affect accuracy of the touch control identification. Therefore, to improve the accuracy of the touch control operation identification, after receiving the sound transmitted by the microphone array 130, the touch control operation identification apparatus 140 may separate the sound transmitted by the microphone array 130 to obtain the valid sound. In specific implementation, the touch control operation identification apparatus 140 may perform a separation operation on a sound in a specific direction based on the position of the touch control point through a technology, for example, beamforming.

In specific implementation, after the touch control operation identification apparatus 140 obtains the valid sound through separation, the touch control operation identification apparatus 140 may further perform an operation, for example, sound enhancement, on the valid sound, to further improve the accuracy of the touch control operation identification.

(3) Contact duration between a touch control operation and the touchscreen 110

When the touch control operation is performed on the touchscreen 110, the touch control operation identification apparatus 140 may obtain a moment at which the touch control operation is performed on the touchscreen 110. When the touch control operation leaves the touchscreen 110, the touch control operation identification apparatus 140 may obtain a moment at which the touch control operation leaves the touchscreen 110, and may calculate contact duration based on the foregoing two moments.

In specific implementation, the touch control operation identification apparatus 140 may obtain the moment at which the touch control operation leaves the touchscreen 110 by using a function (for example, getEventTime()) that is in a motion event (motion event) mechanism and that is used to obtain the moment at which the touch control operation leaves the touchscreen 110.

(4) Capacitance value of each point on the touchscreen 110 when a touch control operation is performed on the touchscreen 110

It can be learned from the foregoing descriptions of the capacitive screen that, when the touch control operation is performed on the touchscreen 110 (that is, the capacitive screen), a capacitance on the touchscreen 110 changes. Therefore, the touch control operation identification apparatus 140 may obtain a change status of a capacitance of each point on the touchscreen 110, to obtain the capacitance value of each point.

(5) Capacitance image

It can be learned from the foregoing descriptions of the capacitive screen that, the touch control operation identification apparatus 140 may generate the capacitance image based on the capacitance value of each point after obtaining the capacitance value of each point on the touchscreen 110.

(6) Infrared information of each point on the touchscreen 110 when a touch control operation is performed on the touchscreen 110

It can be learned from the foregoing descriptions of the infrared screen that, when the touch control operation is performed on the touchscreen 110 (that is, the infrared screen), infrared information on the touchscreen 110 changes. Therefore, the touch control operation identification apparatus 140 may obtain a change status of infrared information of each point on the touchscreen 110, to obtain the infrared information of each point.

(7) Infrared image

It can be learned from the foregoing descriptions of the infrared screen that, the touch control operation identification apparatus 140 may generate an infrared image based on the infrared information of each point after obtaining the infrared information of each point on the touchscreen 110.

(8) Coordinates of each point on a boundary of a contact area

After generating a capacitance image or an infrared image, the touch control operation identification apparatus 140 may determine the boundary of the contact area from the capacitance image or the infrared image by using any one of the following algorithms: an image segmentation algorithm, a seed filling algorithm, a watershed algorithm, and a region growing algorithm that are based on a binary image, to determine the coordinates of each point on the boundary.

(9) Area of a contact area

After determining coordinates of each point on a boundary of the contact area, the touch control operation identification apparatus 140 may calculate the area of the contact area based on the coordinates of each point on the boundary. Specifically, the points on the boundary may be connected to form a polygon, and then a vector area sum of triangles formed by connecting any point on the polygon and two points on the polygon in sequence is calculated, that is, the area of the contact area.

(10) Centroid of a contact area

After determining coordinates of each point on a boundary of the contact area, the touch control operation identification apparatus 140 may obtain centroid coordinates of the contact area by calculation based on the coordinates of each point on the boundary. Specifically, the following formula may be used to calculate the centroid coordinates of the contact area:

$$x_c = \sum Z * x / \sum Z$$

$$y_c = \sum Z * y / \sum Z$$

where $x_c$ represents a centroid coordinate in an X direction of the contact area, $x$ represents a coordinate in an X direction of each point in the contact area, $y_c$ represents a centroid coordinate in a Y direction of the contact area, $y$ represents a coordinate in a Y direction of each point in the contact area, and Z represents a grayscale value of each point.

S303. Identify a type of the touch control operation based on the touch control data.

The type of the touch control operation may be knuckle touch control, fingernail touch control, finger pulp touch control, stylus pen touch control, or the like. This is not specifically limited herein.

It can be learned from S302 that the touch control data includes at least the acceleration that is generated on the touchscreen 110 by the touch control operation and that is obtained by the one or more IMUs related to the touch control point. Based on the acceleration, the touch control data may further include a plurality of types of information such as the sound generated on the touchscreen 110 by the touch control operation, the contact area, the contact duration, and a signal change status (for example, a capacitance value change or an infrared information change) of each point of the touchscreen 110 when the touch control operation is performed on the touchscreen 110. It may be understood that, when data included in the touch control data is different, processes of identifying a type of a touch control operation based on the touch control data are different.

Herein, an example in which touch control data includes only an acceleration obtained by one or more IMUs related to a touch control point is used first to describe in detail a process in which the touch control operation identification apparatus 140 performs touch control operation identification based on the touch control data. As shown in FIG. 6, the process may specifically include the following steps.

S601. Obtain a feature of an acceleration based on the acceleration obtained by one or more IMUs related to a touch control point.

Specifically, when there is one IMU related to the touch control point, the feature of the acceleration is the acceleration obtained by the IMU. When there are a plurality of IMUs related to the touch control point, reference may be made to steps S6011 and S6012 to obtain the feature of the acceleration.

S6011. Construct an undirected graph based on accelerations obtained by the plurality of IMUs related to the touch control point.

Specifically, each IMU in the plurality of IMUs related to the touch control point may be abstracted as a vertex. A plurality of vertices are connected to each other two by two to obtain edges, and an acceleration obtained by each IMU in the plurality of IMUs related to the touch control point is abstracted as a feature of a vertex corresponding to each IMU, to obtain the undirected graph.

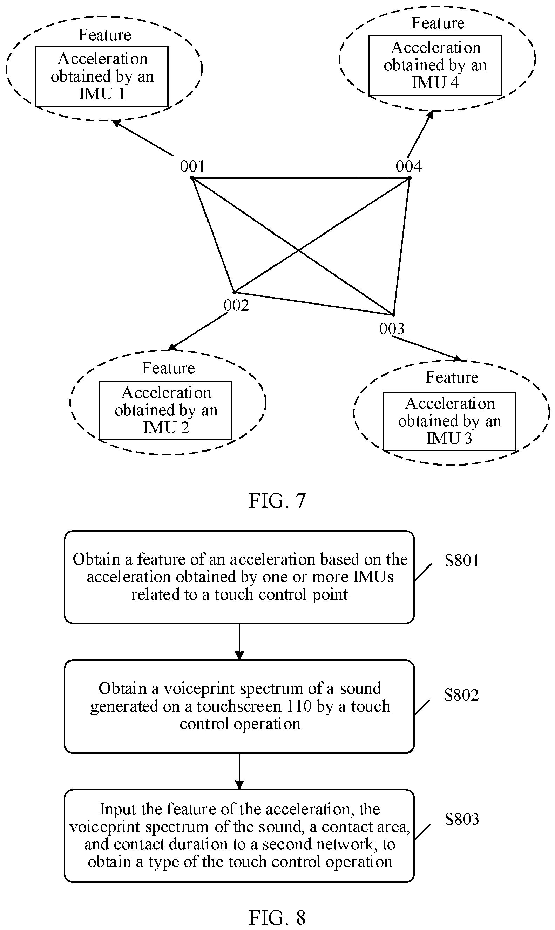

For example, it is assumed that the plurality of IMUs related to the touch control point are an IMU 0, an IMU 1, an IMU 2, and an IMU 3. In this case, the undirected graph constructed based on accelerations obtained by these IMUs may be shown in FIG. 7, where a vertex 000 is a vertex abstracted from the IMU 0, a vertex 001 is a vertex abstracted from the IMU 1, a vertex 002 is a vertex abstracted from the IMU 2, and a vertex 003 is a vertex abstracted from the IMU 3.

It can be learned from the foregoing descriptions of the graph that, an edge in the graph has a weight. Compared with an edge having no weight, a relationship between a plurality of vertices can be better reflected. Therefore, to further improve accuracy of touch control operation identification, in this application, distances between the plurality of IMUs related to the touch control point may be abstracted into weights of edges, to obtain an undirected graph in which an edge has a weight. The distances between the plurality of IMUs related to the touch control point may be calculated based on coordinates of the plurality of IMUs related to the touch control point.

S6012. Input the undirected graph to a first network for feature extraction, to obtain an acceleration feature vector.

It should be noted that the extracted acceleration feature vector V' herein is a feature of the acceleration.

The first network may be represented as:

$$V' = f(G)$$

where V' is the acceleration feature vector, G is the undirected graph, $f()$ is a mapping relationship between the acceleration feature vector and the undirected graph, and $f()$ may be obtained by training with a first sample set including a large quantity of known undirected graphs. The large quantity of known undirected graphs in the first sample set may be: A user inputs a touch control operation to the touchscreen 110 for a plurality of times, and an acceleration generated on the touchscreen 110 by the touch control operation that is input by the user is obtained for a plurality of times. Each time the acceleration is obtained, one undirected graph may be constructed and obtained, thereby obtaining the large quantity of known undirected graphs. In actual application, the first network may be a graph neural network of various types, such as a graph convolutional network and a graph attention network. This is not specifically limited herein.

S602. Input the feature of the acceleration to a second network, to obtain a type of the touch control operation.

In this case, the second network may be represented as:

$$T_1 = f_1(V)$$

where $T_1$ is the type of the touch control operation, V is the feature of the acceleration, in other words, the acceleration obtained by one IMU related to the touch control point or the acceleration feature vector V', $f_1()$ is a mapping relationship between the type of the touch control operation and the feature of the acceleration, and $f_1()$ may be obtained by training with a second sample set including a large quantity of known acceleration features. When the feature of the acceleration is an acceleration feature vector, the large quantity of known acceleration features in the second sample set may be obtained by inputting the large quantity of known undirected graphs in the first sample set to the first network for feature extraction. In actual application, the second network may be a convolutional neural network of various types, such as a residual neural network and a dense convolutional network. Optionally, the second network may alternatively be a random forest network, a support vector machine network, or the like.

Further, an example in which touch control data includes an acceleration obtained by one or more IMUs related to a touch control point, a sound generated by a touch control operation on the touchscreen 110, a contact area, and contact duration is used first to describe in detail a process in which the touch control operation identification apparatus 140 performs touch control operation identification based on the touch control data. As shown in FIG. 8, the process may specifically include the following steps.

S801. Obtain a feature of an acceleration based on the acceleration obtained by one or more IMUs related to a touch control point.

It can be learned that S801 is the same as S601. For details, refer to the foregoing related descriptions of S601. The details are not described herein again.

S802. Obtain a voiceprint spectrum of a sound generated on the touchscreen 110 by a touch control operation.

Specifically, spectrum conversion may be performed on the obtained sound generated on the touchscreen 110 by the touch control operation, to obtain the voiceprint spectrum. A process of performing spectrum conversion on the sound may specifically include pre-emphasis, framing, windowing, fast Fourier transform (fast Fourier transform, FFT), and the like. This is not specifically limited herein.

S803. Input the feature of the acceleration, the voiceprint spectrum of the sound, a contact area, and contact duration to a second network, to obtain a type of the touch control operation.

In this case, the second network may be represented as:

$$T_2 = f_2(W)$$

where $T_2$ is the type of the touch control operation, W is a data set that includes the feature V of the acceleration, the voiceprint spectrum of the sound, the contact area, and the contact duration, $f_2()$ is a mapping relationship between the type of the touch control operation and the foregoing data set, $f_2()$ may be obtained by training with a third sample set including a large quantity of known data sets, and each known data set includes a feature of a known acceleration, a voiceprint spectrum of a known sound, a known contact area, and known contact duration.

It should be noted that the foregoing two processes of performing touch control identification based on touch control data listed in FIG. 6 and FIG. 8 are merely examples. In specific implementation, the process of performing touch control identification based on touch control data may alternatively be another process. For example, when the touch control data includes a capacitive screen parameter or an infrared screen parameter, the parameter that is input to the second network further correspondingly includes the capacitive screen parameter or the infrared screen parameter.

In specific implementation, a manner of performing training by using the first sample set and the second sample set (or the third sample set) to correspondingly obtain the first network and the second network may be supervised training, or may be unsupervised training. This is not specifically limited herein.

For example, the first sample set and the second sample set are used to perform supervised training to obtain the first network and the second network. When the training manner is supervised training, the second sample set may further include a known touch control operation type corresponding to each known undirected graph in a large quantity of known undirected graphs. Specifically, the large quantity of known undirected graphs may be sequentially used as input of the untrained first network, to obtain a feature of an acceleration corresponding to each known undirected graph output by the untrained first network. Then, the feature of the acceleration corresponding to each known undirected graph is used as input of the untrained second network, and the known touch control operation type corresponding to each known undirected graph is used as reference for an output value of the untrained second network. A loss value between the output value of the untrained second network and the known touch control operation type is calculated by using a loss function, and then parameters of the untrained first network and the untrained second network are adjusted based on the loss value. In specific implementation, the untrained first network and the untrained second network may be trained iteratively by using a large quantity of known undirected graphs and known touch control operation types corresponding to the known undirected graphs, and the parameters of the untrained first network and the untrained second network are continuously adjusted, until the first network and the second network can accurately output, based on an input undirected graph, an output value that is the same as a known touch control operation type corresponding to the undirected graph.

In a specific embodiment of this application, the touch control operation identification apparatus 140 may further record an action indicated by each type of touch control operation. For example, an action indicated by the knuckle touch control is to take a screenshot of a display interface of the terminal device 100, and an action indicated by the finger pulp touch control is to start an application program corresponding to an application icon displayed at a touch control point. Therefore, after determining a type of a touch control operation, the touch control operation identification apparatus 140 may perform, based on the type of the touch control operation, an action indicated by the touch control operation.

In conclusion, in this embodiment of this application, the IMU array 120 is deployed on the terminal device 100. Therefore, regardless of that a user inputs a touch control operation at any position of the touchscreen 110, an IMU related to a touch control point in the IMU array 120 can obtain an acceleration generated on the touchscreen 110 by the touch control operation. Compared with the conventional technology in which only one IMU deployed at a central position of the touchscreen 110 obtains the acceleration, to avoid a case that the acceleration is unobtainable and a type of the touch control operation is unidentifiable.

In addition, in this embodiment of this application, the type of the touch control operation is identified based on touch control data including various types of data (such as an acceleration, a sound, and a contact area). Compared with the conventional technology in which the type of the touch control operation is determined based on only an acceleration obtained by one IMU, reference data is richer, and accuracy of touch control operation identification can be improved.

In addition, in this embodiment of this application, the type of the touch control operation can be identified as the knuckle touch control, the fingernail touch control, the finger pulp touch control, the stylus pen touch control, or the like. This is different from the conventional technology in which the knuckle touch control and the non-knuckle touch control are not accurately distinguished between. Therefore, in this application, the accuracy of the touch control operation identification can be further improved. It may be understood that, when the accuracy of the touch control operation identification is higher, an action performed by the terminal device 100 based on the type of the touch control operation is also more accurate, so that touch control experience of a user can be optimized.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

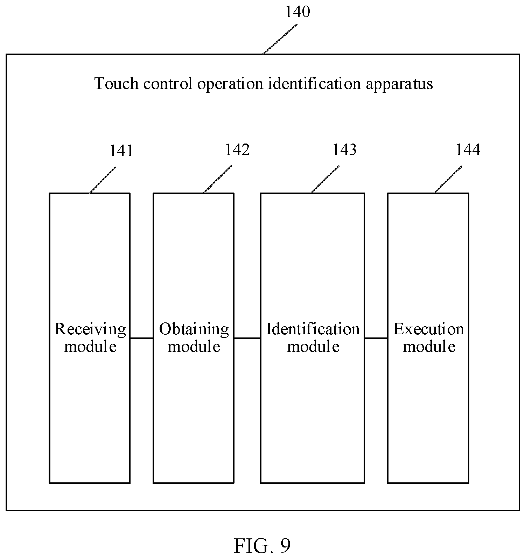

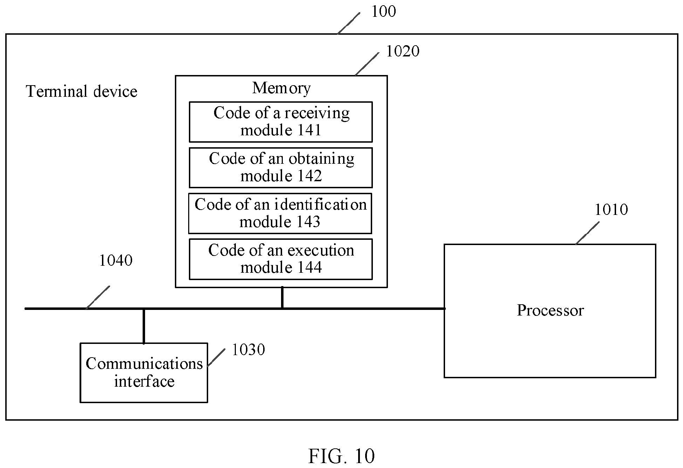

The following further describes the touch control operation identification apparatus 140 and the terminal device 100 with reference to FIG. 9 and FIG. 10.

FIG. 9 is a schematic diagram of a structure of a touch control operation identification apparatus 140 according to this application. It should be understood that FIG. 9 is merely an example of structural division of the touch control operation identification apparatus 140 based on functions. A specific division manner of the structure of the touch control operation identification apparatus 140 is not limited in this application.

As shown in FIG. 9, the apparatus 140 includes a receiving module 141, an obtaining module 142, an identification module 143, and an execution module 144. The following describes functions of modules of the touch control operation identification apparatus 140 by way of example. It should be understood that the functions of the modules described in the following examples are merely functions that may be provided by the touch control operation identification apparatus 140 in some embodiments of this application, and the functions of the modules are not limited in this application.

The receiving module 141 is configured to receive a touch control operation via a touchscreen 110.

The obtaining module 142 is configured to obtain touch control data generated by the touch control operation, where the touch control data includes an acceleration generated on the touchscreen 110, and the acceleration is obtained by one or more IMUs related to a touch control point in an IMU array.

The identification module 143 is configured to identify a type of the touch control operation based on the touch control data.

The execution module 144 is configured to perform, based on the type of the touch control operation, an action indicated by the touch control operation.

In a possible implementation, the type of the touch control operation is one of the following types: knuckle touch control, fingernail touch control, finger pulp touch control, and stylus pen touch control.

In a possible implementation, the related IMU is one or more IMUs that are in the IMU array 120 and that are closest to the touch control point physically, or is an IMU corresponding to an area in which the touch control point is located when each IMU in the IMU array 120 is responsible for a partial area of the touchscreen 110.

In a possible implementation, the obtaining module 142 is further configured to: obtain a position of the touch control point at which the touch control operation is performed on the touchscreen 110, and filter out, based on the position of the touch control point, an IMU whose distance from the touch control point is greater than a preset distance in the IMU array 120, to determine the one or more related IMUs.

In a possible implementation, the touch control data further includes one or more of the following: a sound generated by the touch control operation on the touchscreen 110, contact duration between the touch control operation and the touchscreen 110, and a contact area between the touch control operation and the touchscreen 110.

In a possible implementation, the identification module 143 is specifically configured to: obtain a feature of the acceleration first based on the acceleration obtained by the one or more related IMUs, and input the feature of the acceleration to a second network to obtain the type of the touch control operation. When there is one related IMU, the feature of the acceleration is the acceleration obtained by the related IMU, and when there are a plurality of related IMUs, the feature of the acceleration is an acceleration feature vector obtained by constructing an undirected graph based on the acceleration obtained by the plurality of related IMUs, and inputting the undirected graph to a first network for feature extraction.

In a possible implementation, a parameter that is input to the second network further includes at least one of the following content: a voiceprint spectrum of the sound, the contact duration, and the contact area.

In a possible implementation, the touchscreen 110 is a capacitive touchscreen, and the touch control data further includes one or more of the following capacitive screen parameters: a capacitance value of each point on the touchscreen 110 when the touch control operation is performed on the touchscreen 110, a capacitance image generated based on the capacitance value of each point on the touchscreen 110, and a feature of a contact area extracted based on the capacitance image.

In a possible implementation, the touchscreen 110 is an infrared screen, and the touch control data further includes one or more of the following infrared screen parameters: infrared information of each point on the touchscreen 110 when the touch control operation is performed on the touchscreen 110, an infrared image generated based on the infrared information of each point on the touchscreen 110, and a feature of a contact area extracted based on the infrared image.

In a possible implementation, the parameter that is input to the second network further includes at least one of the following content: the capacitive screen parameter and the infrared screen parameter.

In a possible implementation, the touch control data is data within a preset time period, and the preset time period includes a moment at which the touch control operation is performed on the touchscreen 110.

In a possible implementation, the first network is a graph neural network, and the second network is a convolutional neural network.

In a possible implementation, the IMU array 120 is deployed at a preset position on a side that is of the touchscreen 110 and that is close to a back of the terminal device.

In a possible implementation, the IMU array 120 includes five IMUs, one IMU is deployed at a central position of the side that is of the touchscreen 110 and that is close to the back of the terminal device, and the remaining four IMUs are deployed at four corners of the side that is of the touchscreen 110 and that is close to the back of the terminal device.

For brevity, the modules in the touch control operation identification apparatus 140 are not described in detail in this embodiment of this application. For specific functions of the modules, refer to S301 to S303.

Because of the functions of the foregoing modules, the touch control operation identification apparatus 140 provided in this application identifies a type of a touch control operation based on touch control data. The touch control data includes an acceleration obtained by one or more IMUs related to a touch control point in the IMU array 120. Different from the conventional technology in which the type of the touch control operation is determined based on only an acceleration obtained by one IMU deployed at the central position of the touchscreen 110, this improves accuracy of touch control operation identification, so that touch control experience of a user is optimized.

FIG. 10 is a schematic diagram of a structure of a terminal device 100 according to this application. The terminal device 100 is configured to perform the foregoing touch control operation identification method. When the touch control operation identification apparatus 140 is a software module, the touch control operation identification apparatus 140 may be deployed on the terminal device 100 to implement a function of the touch control operation identification apparatus 140.

As shown in FIG. 10, the terminal device 100 includes a processor 1010, a memory 1020, and a communications interface 1030. The processor 1010, the memory 1020, and the communications interface 1030 may be connected via a bus 1040.

The processor 1010 may read program code (including instructions) stored in the memory 1020, and execute the program code stored in the memory 1020, to enable the terminal device 100 to perform the steps in the touch control operation identification method provided in the foregoing method embodiments, or enable the terminal device 100 to deploy the touch control operation identification apparatus 140.

The processor 1010 may have a plurality of specific implementations. For example, the processor 1010 may be a central processing unit (central processing unit, CPU), a graphics processing unit (graphics processing unit, GPU), or the like. The processor 1010 may alternatively be a single-core processor or a multi-core processor. The processor 1010 may be a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof. The processor 1010 may alternatively be implemented independently by using a logic device with built-in processing logic, for example, an FPGA or a digital signal processor (digital signal processor, DSP).

The memory 1020 may store program code and program data. The program code includes code of the receiving module 141, code of the obtaining module 142, code of the identification module 143, code of the execution module 144, and the like. The program data includes an acceleration and a sound generated by a touch control operation on a touchscreen, a contact area between the touch control operation and the touchscreen, contact duration, and the like.

In actual application, the memory 1020 may be a nonvolatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 1020 may alternatively be a volatile memory. The volatile memory may be a random access memory (random access memory, RAM), and is used as an external cache.

The communications interface 1030 may be a wired interface (for example, an Ethernet interface) or a wireless interface (for example, a cellular network interface or a wireless local area network interface), and is configured to communicate with another computing node or apparatus. When the communications interface 1030 is a wired interface, the communications interface 1030 may use a transmission control protocol/internet protocol (transmission control protocol/internet protocol, TCP/IP) suite, for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 1040 may be a peripheral component interconnect (peripheral component interconnect, PCI) bus, an extended industry standard architecture (extended industry standard architecture, EISA for short) bus, or the like. The bus 1040 may be classified into an address bus, a data bus, a control bus, or the like. For ease of representation, only one thick line is for representing the bus in FIG. 10, but this does not mean that there is only one bus or only one type of bus.

The terminal device 100 is configured to perform the method described in the foregoing embodiments of the touch control operation identification method, and belongs to a same concept as the foregoing method embodiments. For a specific implementation process of the terminal device 100, refer to the foregoing method embodiments. Details are not described herein again.

It should be understood that the terminal device 100 is merely an example provided in this embodiment of this application. In addition, the terminal device 100 may have more or fewer components than the components shown in FIG. 10, may combine two or more components, or may be implemented in different component configurations.

This application further provides a computer-readable storage medium. The computer-readable storage medium stores instructions. When the instructions are run, some or all of the steps of the touch control operation identification method recorded in the foregoing embodiments may be implemented.

This application further provides a computer program product. When the computer program product is read and executed by a computer, some or all of the steps of the touch control operation identification method recorded in the foregoing method embodiments may be implemented.

In the foregoing embodiments, the description of each embodiment has respective focuses. For a part that is not described in detail in an embodiment, reference may be made to related descriptions in other embodiments.

All or some of the foregoing embodiments may be implemented by using software, hardware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium, or the like.

Sequence adjustment, combination, or deletion may be performed on steps in the method in embodiments of this application based on an actual requirement. The units in the apparatus in embodiments of this application may be divided, combined, or deleted based on the actual requirement.

Embodiments of this application are described in detail above. The principle and implementation of this application are described herein through specific examples. The description about embodiments of this application is merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

**Claims**

1. A touch control operation identification method, applied to a terminal device, wherein the terminal device comprises an inertial measurement unit IMU array and a touchscreen, and the method comprises:

    receiving a touch control operation through the touchscreen;
    obtaining touch control data generated by the touch control operation, wherein the touch control data comprises an acceleration generated on the touchscreen, and the acceleration is obtained by one or more IMUs that are related to a touch control point in the IMU array; and
    identifying a type of the touch control operation based on the touch control data.

2. The method according to claim 1, wherein the type of the touch control operation is one of the following types:
    knuckle touch control, fingernail touch control, finger pulp touch control, and stylus pen touch control.

3. The method according to claim 1 or 2, wherein the related IMU is:

    one or more IMUs that are in the IMU array and that are closest to the touch control point physically; or
    an IMU corresponding to an area in which the touch control point is located when each IMU in the IMU array is responsible for a partial area of the touchscreen.

4. The method according to claim 1 or 2, wherein the method further comprises:

    obtaining a position of the touch control point; and
    based on the position of the touch control point, filtering out an IMU whose distance from the touch control point is greater than a preset distance in the IMU array, and determining the one or more related IMUs.

5. The method according to any one of claims 1 to 4, wherein the touch control data further comprises one or more of the following: a sound generated by the touch control operation on the touchscreen, contact duration between the touch control operation and the touchscreen, and a contact area between the touch control operation and the touchscreen.

6. The method according to any one of claims 1 to 5, wherein the identifying a type of the touch control operation based on the touch control data comprises:

    obtaining a feature of the acceleration based on the acceleration obtained by the one or more related IMUs, wherein when there is one related IMU, the feature of the acceleration is the acceleration obtained by the related IMU, and when there are a plurality of related IMUs, the feature of the acceleration is an acceleration feature vector obtained by constructing an undirected graph based on the acceleration obtained by the plurality of related IMUs, and inputting the undirected graph to a first network for feature extraction; and
    inputting the feature of the acceleration to a second network, to obtain the type of the touch control operation.

7. The method according to claim 6, wherein a parameter that is input to the second network further comprises at least one of the following content: a voiceprint spectrum of the sound, the contact duration, and the contact area.

8. The method according to any one of claims 1 to 7, wherein the touchscreen is a capacitive touchscreen, and the touch control data further comprises one or more of the following capacitive screen parameters: a capacitance value of each point on the touchscreen when the touch control operation is performed on the touchscreen, a capacitance image that is generated based on the capacitance value of each point on the touchscreen, and a feature that is of a contact area and that is extracted based on the capacitance image, wherein the contact area is an area in which the touch control operation is in contact with the touchscreen.

9. The method according to any one of claims 1 to 7, wherein the touchscreen is an infrared technology touchscreen, and the touch control data further comprises one or more of the following infrared screen parameters:
    infrared information of each point on the touchscreen when the touch control operation is performed on the touchscreen, an infrared image that is generated based on the infrared information of each point on the touchscreen, and a feature that is of a contact area and that is extracted based on the infrared image.

10. The method according to claim 8 or 9, wherein the parameter that is input to the second network further comprises at least one of the following content: the capacitive screen parameter and the infrared screen parameter.

11. The method according to any one of claims 1 to 10, wherein the touch control data is data within a preset time period, and the preset time period comprises a moment at which the touch control operation is performed on the touchscreen.

12. The method according to any one of claims 6 to 11, wherein the first network is a graph neural network, and the second network is a convolutional neural network.

13. The method according to any one of claims 1 to 12, wherein the IMU array is deployed at a preset position on a side that is of the touchscreen and that is close to a back of the terminal device.

14. The method according to any one of claims 1 to 13, wherein the IMU array comprises five IMUs, one IMU is deployed at a central position of the side that is of the touchscreen and that is close to the back of the terminal device, and the remaining four IMUs are deployed at four corners of the side that is of the touchscreen and that is close to the back of the terminal device.

15. The method according to any one of claims 1 to 14, wherein the method further comprises:
performing, based on the type of the touch control operation, an action indicated by the touch control operation.

16. The method according to any one of claims 1 to 15, wherein the terminal device is an electronic whiteboard.

17. A touch control operation identification apparatus, used in a terminal device, wherein the terminal device comprises an inertial measurement unit IMU array and a touchscreen, and the apparatus comprises:

a receiving module, configured to receive a touch control operation through the touchscreen;
an obtaining module, configured to obtain touch control data generated by the touch control operation, wherein the touch control data comprises an acceleration generated on the touchscreen, and the acceleration is obtained by one or more IMUs related to a touch control point in the IMU array; and
an identification module, configured to identify a type of the touch control operation based on the touch control data.

18. The apparatus according to claim 17, wherein the type of the touch control operation is one of the following types: knuckle touch control, fingernail touch control, finger pulp touch control, and stylus pen touch control.

19. The apparatus according to claim 17 or 18, wherein the related IMU is:

one or more IMUs that are in the IMU array and that are closest to the touch control point physically; or
an IMU corresponding to an area in which the touch control point is located when each IMU in the IMU array is responsible for a partial area of the touchscreen.

20. The apparatus according to claim 17 or 18, wherein the obtaining module is further configured to:

obtain a position of the touch control point at which the touch control operation is performed on the touchscreen; and
based on the position of the touch control point, filter out an IMU whose distance from the touch control point is greater than a preset distance in the IMU array, and determine the one or more related IMUs.

21. The apparatus according to any one of claims 17 to 20, wherein the touch control data further comprises one or more of the following: a sound generated by the touch control operation on the touchscreen, contact duration between the touch control operation and the touchscreen, and a contact area between the touch control operation and the touchscreen.

22. The apparatus according to any one of the claims 17 to 21, wherein the identification module is specifically configured to:

obtain a feature of the acceleration based on the acceleration obtained by the one or more related IMUs, wherein when there is one related IMU, the feature of the acceleration is the acceleration obtained by the related IMU, and when there are a plurality of related IMUs, the feature of the acceleration is an acceleration feature vector obtained by constructing an undirected graph based on the acceleration obtained by the plurality of related IMUs, and inputting the undirected graph to a first network for feature extraction; and
input the feature of the acceleration to a second network, to obtain the type of the touch control operation.

23. The apparatus according to claim 21 or 22, wherein a parameter that is input to the second network further comprises at least one of the following content: a voiceprint spectrum of the sound, the contact duration, and the contact area.

24. The apparatus according to any one of claims 17 to 23, wherein the touchscreen is a capacitive touchscreen, and the touch control data further comprises one or more of the following capacitive screen parameters: a capacitance value of each point on the touchscreen when the touch control operation is performed on the touchscreen, a capacitance image that is generated based on the capacitance value of each point on the touchscreen, and a feature that is of a contact area and that is extracted based on the capacitance image, wherein the contact area is an area in which the touch control operation is in contact with the touchscreen.

25. The apparatus according to any one of claims 17 to 23, wherein the touchscreen is an infrared technology touchscreen, and the touch control data further comprises one or more of the following infrared screen parameters: infrared information of each point on the touchscreen when the touch control operation is performed on the touchscreen, an infrared image that is generated based on the infrared information of each point on the touchscreen, and a feature that is of a contact area and that is extracted based on the infrared image.

26. The apparatus according to claim 24 or 25, wherein the parameter that is input to the second network further comprises at least one of the following content: the capacitive screen parameter and the infrared screen parameter.

27. The apparatus according to any one of claims 17 to 26, wherein the touch control data is data within a preset time period, and the preset time period comprises a moment at which the touch control operation is performed on the touchscreen.

28. The apparatus according to any one of claims 22 to 27, wherein the first network is a graph neural network, and the second network is a convolutional neural network.

29. The apparatus according to any one of claims 17 to 28, wherein the IMU array is deployed at a preset position on a side that is of the touchscreen and that is close to a back of the terminal device.

30. The apparatus according to any one of claims 17 to 29, wherein the IMU array comprises five IMUs, one IMU is deployed at a central position of the side that is of the touchscreen and that is close to the back of the terminal device, and the remaining four IMUs are deployed at four corners of the side that is of the touchscreen and that is close to the back of the terminal device.

31. The apparatus according to any one of claims 17 to 30, wherein the apparatus further comprises:
an execution module, configured to perform, based on the type of the touch control operation, an action indicated by the touch control operation.

32. The apparatus according to any one of claims 17 to 31, wherein the terminal device is an electronic whiteboard.

33. A terminal device, wherein the terminal device comprises a processor and a memory, the memory is configured to store instructions, and when the terminal device runs, the processor executes the instructions to implement the method according to any one of claims 1 to 16.

34. A computer-readable storage medium, wherein the computer-readable storage medium stores instructions, and the instructions are used to implement the method according to any one of claims 1 to 16.

Terminal device 100

| Touchscreen 110 |
| --- |
| IMU array 120 |
| Microphone array 130 |
| Touch control operation identification apparatus 140 |

FIG. 1

One side that is of the touchscreen 110
and that is close to a back of a terminal
device 100

Touchscreen 110

IMU 1

Area 1

IMU 4

Area 4

Area 0

IMU 0

Area 2

Area 3

IMU 2

IMU 3

IMU array 120

FIG. 2

Receive a touch control operation via a touchscreen 110    S301

Obtain touch control data generated by the touch control operation, where the touch control data includes an acceleration generated on the touchscreen 110, and the acceleration is obtained by one or more IMUs that are related to a touch control point in an IMU array 120    S302

Identify a type of the touch control operation based on the touch control data    S303

FIG. 3

Acceleration

FIG. 4A

Acceleration

FIG. 4B

Capacitance
value

FIG. 5A

Capacitance
value

100

50

0        t                                          Time

FIG. 5B

Obtain a feature of an acceleration based on
the acceleration obtained by one or more
IMUs related to a touch control point          S601

Input the feature of the acceleration to a
second network, to obtain a type of a touch
control operation                              S602

FIG. 6

Feature

Acceleration
obtained by an
IMU 1

Feature

Acceleration
obtained by an
IMU 4

001                              004

002

003

Feature

Acceleration
obtained by an
IMU 2

Feature

Acceleration
obtained by an
IMU 3

FIG. 7

Obtain a feature of an acceleration based on the
acceleration obtained by one or more IMUs
related to a touch control point

S801

Obtain a voiceprint spectrum of a sound
generated on a touchscreen 110 by a touch
control operation

S802

Input the feature of the acceleration, the
voiceprint spectrum of the sound, a contact area,
and contact duration to a second network, to
obtain a type of the touch control operation

S803

FIG. 8

FIG. 9

FIG. 10

## INTERNATIONAL SEARCH REPORT

| International application No. |
| --- |
| **PCT/CN2022/101427** |

| A. | CLASSIFICATION OF SUBJECT MATTER |
| --- | --- |

G06F 3/041(2006.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 加速度, 惯性, 测量, 感测, 触摸, 关节, 敲击, accelerated speed, inertia, measurement, sensing, touch, joint, knock

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110109563 A (QEEXO, CO.) 09 August 2019 (2019-08-09)<br>      description, paragraphs 4-173 and 219-335, and figures 1-7 | 1-34 |
| X | CN 107678542 A (WUHAN YEZHEN TECHNOLOGY CO., LTD.) 09 February 2018 (2018-02-09)<br>      description, paragraphs 4-53, and figures 1-4 | 1-34 |
| A | CN 109172066 A (HUAZHONG UNIVERSITY OF SCIENCE AND TECHNOLOGY) 11 January 2019 (2019-01-11)<br>      entire document | 1-34 |
| A | WO 2014167363 A1 (STORMLIT LIMITED) 16 October 2014 (2014-10-16)<br>      entire document | 1-34 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2022** | **20 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/101427**

| Patent document cited in search report | | | Publication date (day/month/year) | Patent family member(s) | | | Publication date (day/month/year) |
|---|---|---|---|---|---|---|---|
| CN | 110109563 | A | 09 August 2019 | EP | 3521983 | A1 | 07 August 2019 |
| | | | | WO | 2016048961 | A1 | 31 March 2016 |
| | | | | CN | 106687967 | A | 17 May 2017 |
| | | | | EP | 3198497 | A1 | 02 August 2017 |
| | | | | US | 2018157371 | A1 | 07 June 2018 |
| | | | | US | 10282024 | B2 | 07 May 2019 |
| | | | | CN | 106687967 | B | 04 June 2021 |
| | | | | EP | 3198497 | B1 | 20 April 2022 |
| CN | 107678542 | A | 09 February 2018 | CN | 107678542 | B | 02 April 2021 |
| CN | 109172066 | A | 11 January 2019 | CN | 109172066 | B | 20 December 2019 |
| WO | 2014167363 | A1 | 16 October 2014 | GB | 201517611 | D0 | 18 November 2015 |
| | | | | US | 2015338942 | A1 | 26 November 2015 |
| | | | | US | 2015338974 | A1 | 26 November 2015 |
| | | | | GB | 2527244 | A | 16 December 2015 |
| | | | | US | 9268423 | B2 | 23 February 2016 |
| | | | | GB | 2527244 | B | 11 August 2021 |

Form PCT/ISA/210 (patent family annex) (January 2015)

**REFERENCES CITED IN THE DESCRIPTION**

**Patent documents cited in the description**

- CN 202110738887
- CN 202110997006